# FASCICULE DE BREVET EUROPEEN

(11) **EP 2 768 699 B1**
(45) Date de publication et mention de la délivrance du brevet: **13.01.2016**
(21) Numéro de dépôt: 12767057.8
(22) Date de dépôt: 11.09.2012
(51) Int. Cl.: B60R 11/06, B60R 11/00, B60R 7/04, B60N 3/06

(54) **REPOSE PIED POUR VEHICULE**
FAHRZEUGFUSSSTÜTZE
VEHICLE FOOT-REST

(30) Priorité: 17.10.2011 FR 1159368
(43) Date de publication de la demande: 27.08.2014
(73) Titulaire: Renault S.A.S., 92100 Boulogne-Billancourt (FR)
(72) Inventeur: BOUILLON, Jean-Charles, F-78940 La Queue Lez Yvelines (FR); COCO, Nathalie, F-78960 Voisins le Bretonneux (FR)
(86) Numéro de dépôt international: PCT/FR2012/052020
(87) Numéro de publication internationale: WO 2013/057397

(56) Documents cités:
- EP-A1- 2 241 474
- FR-A1- 2 910 404

## Description

La présente invention concerne un repose-pied destiné à être implanté entre une partie d'un tablier et un plancher d'un véhicule, notamment d'un véhicule automobile, comportant un organe servant d'appui muni d'une surface d'appui adaptée pour recevoir le ou les pieds d'un passager du véhicule automobile et en regard d'au moins une partie de laquelle est apte à s'étendre un tapis d'isolation phonique rapporté sur le plancher du véhicule automobile comportant une couche isolante interposée entre le plancher et une couche de revêtement rapportée sur ladite couche isolante ayant une face extérieure formée d'un textile du type moquette, ledit organe servant d'appui comprenant en outre au moins un compartiment de rangement.

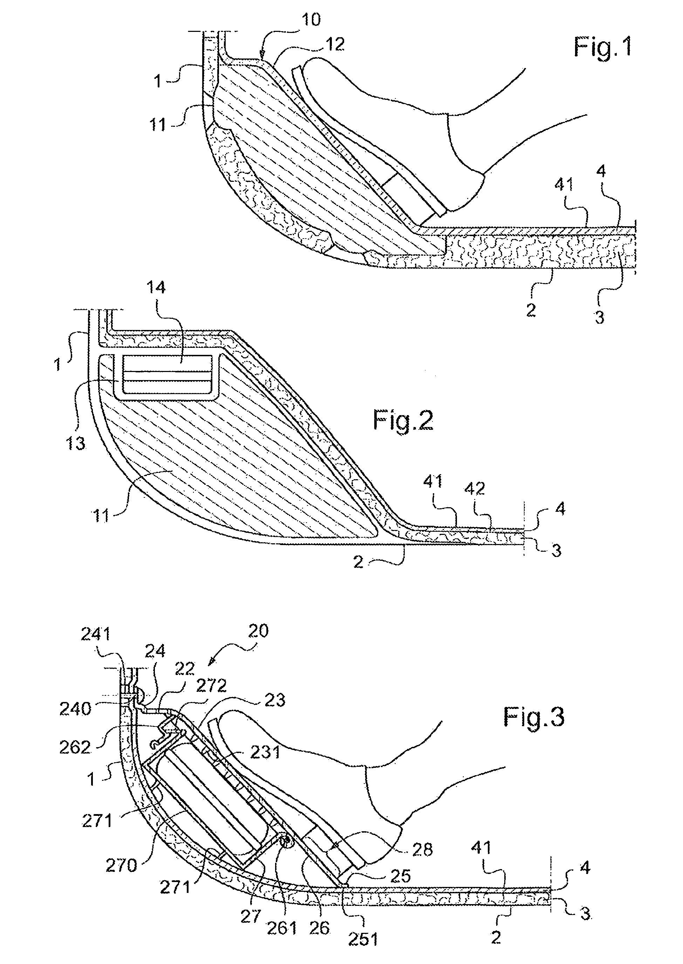

Un dispositif repose-pied déjà connu de l'homme du métier est illustré à la figure 1. Pour un meilleur confort postural, un repose-pied 10 est généralement implanté entre une partie d'un tablier 1 et un plancher 2 du véhicule, à l'intérieur de l'habitacle du véhicule, et comporte une cale 11 en matériau thermoplastique (PSE ou PPE) réalisée par moulage, intégrée au niveau d'une couche isolante 3 de mousse acoustique destinée à l'isolation phonique, rapportée sur le plancher 2 du véhicule, l'ensemble étant revêtu d'une couche de revêtement 4 permettant de respecter les contraintes esthétiques imposées, ayant une face extérieure 41 formée d'un textile de type moquette. La cale 11 ainsi intégrée à la couche isolante 3 comporte une partie plane rigide 12 destinée à recevoir le pied du passager en étant disposée de manière inclinée vers l'avant du véhicule selon un angle prédéterminé par rapport au plancher.

Comme illustré en figure 2, il est en outre connu de modifier un tel dispositif repose-pied, pour intégrer un compartiment de rangement destiné au rangement d'un équipement d'aide à la réparation de pneus du véhicule automobile. Pour ce faire, la cale 11, implantée entre la partie de tablier 1 et le plancher 2, est munie d'une cavité 13, réalisée dans le volume interne de la cale, en partie supérieure de celle-ci, formant un logement adapté à recevoir un équipement 14 d'aide à la réparation des pneus constitué typiquement d'un compresseur et d'un réservoir de produit d'étanchéité. La cale 11 est recouverte par la couche de revêtement 4, qui peut être traitée acoustiquement en y associant une couche isolante 3, par exemple en feutre acoustique, directement liée à la face inférieure 42 de la couche de revêtement 4.

Aussi, pour accéder au volume interne de rangement intégré au dispositif repose-pied, il est nécessaire de retirer au préalable la couche de revêtement textile recouvrant l'ensemble. Cette opération est incommode et laborieuse à mettre en oeuvre. En outre, l'implantation de ce dispositif dans le véhicule est relativement complexe, dans la mesure où la cale servant de repose-pied est destinée à être intégrée sous la couche isolante. De plus, le volume de la cale 11 en PPE étant relativement important, le coût de fabrication se trouve augmenté.

Le document FR-A- 2910404 montre une boîte qui peut être employée comme repose-pied.

Dans ce contexte, l'invention a pour but de proposer un repose-pied intégrant un volume de rangement, qui soit simple à implanter dans un véhicule et qui permette de fournir un accès aisé au volume de rangement en cas de besoin.

A cette fin, le repose-pied de l'invention, par ailleurs conforme à la définition générique qu'en donne le préambule ci-dessus, est essentiellement caractérisé en ce que ladite surface d'appui comprend une face interne destinée à être positionnée en regard d'une face extérieure de ladite couche de revêtement lors de l'implantation du repose-pied, ladite face interne étant munie d'organes de liaison conçus pour supporter ledit compartiment de rangement de sorte que le volume interne dudit compartiment de rangement s'étende entre ladite face interne de ladite surface d'appui et ladite face extérieure de ladite couche de revêtement.

Un mode de réalisation avantageux prévoit que ledit organe servant d'appui comprend une semelle plane rigide conçue pour être reliée à son extrémité supérieure à la partie de tablier par au moins une liaison fixe amovible tandis que son extrémité inférieure comprend une zone d'appui destinée à être positionnée en appui libre par rapport au plancher, de sorte que ladite surface d'appui se présente en étant inclinée vers l'avant du véhicule selon une inclinaison donnée.

Avantageusement, lesdits organes de liaison sont conçus pour permettre un assemblage mobile dudit compartiment de rangement avec ladite face interne de ladite surface d'appui, selon une première configuration où ledit compartiment de rangement est fermé par ladite face interne de ladite surface d'appui et une deuxième configuration où ledit volume interne dudit compartiment de rangement est rendu accessible.

De préférence, lesdits organes de liaison comprennent des moyens de verrouillage aptes à coopérer avec des moyens correspondants du compartiment de rangement pour bloquer ledit compartiment de rangement dans ladite première configuration.

Selon un mode de réalisation, lesdits organes de liaison comprennent des moyens formant pivot par l'intermédiaire desquels ledit compartiment de rangement est relié à ladite face interne de ladite surface d'appui, de sorte à constituer une liaison pivot apte à guider en rotation ledit compartiment de rangement autour d'un axe de liaison sensiblement parallèle à ladite face interne de ladite surface d'appui.

Avantageusement, ledit compartiment de rangement comprend une partie de fond opposée à ladite face interne de ladite surface d'appui, ladite partie de fond comprenant au moins un pied d'appui destiné à reposer sur la face extérieure de ladite couche de revêtement lors de l'implantation du repose-pied.

De préférence, ladite surface d'appui dudit organe servant d'appui comprend une série de nervures sensiblement parallèles.

Avantageusement, ladite surface d'appui dudit organe servant d'appui comprend une zone inférieure dépourvue desdites nervures.

Selon un mode de réalisation, ledit compartiment de rangement comprend une enveloppe rigide moulée selon au moins une forme permettant de recevoir un équipement d'aide à la réparation de pneus du véhicule automobile.

De préférence, ladite enveloppe rigide comprend une première forme apte à recevoir un compresseur et une deuxième forme apte à recevoir un réservoir contenant un produit d'étanchéité.

D'autres caractéristiques et avantages de l'invention ressortiront clairement de la description qui en est faite ci-après, à titre indicatif et nullement limitatif, en référence aux dessins annexés, dans lesquels:
- les Figures 1 et 2 illustrent de façon schématique des dispositifs repose-pied de l'art antérieur et ont déjà été décrites ;
- la Figure 3 illustre de façon schématique un repose-pied conforme à l'invention;
- la Figure 4 illustre une vue de dessus en perspective du repose-pied conforme à l'invention dans sa position d'implantation dans l'habitacle du véhicule automobile ; et
- la Figure 5 illustre une vue de dessous en perspective du repose-pied conforme à l'invention.

Comme illustré en Figure 3, le repose-pied 20 conforme à l'invention est destiné à être complètement dissocié de la couche isolante 3. Aussi, cette dernière peut-elle être traitée de manière simplifié en rapportant directement sur le plancher une couche de feutre, par exemple de 20 mm d'épaisseur, faisant office d'absorbant acoustique, qui est donc interposée entre le plancher 2 et la couche de revêtement 4 rapportée sur ladite couche isolante ayant une face extérieure 41 formée d'un textile du type moquette.

Le repose-pied 20 conforme à l'invention est en outre destiné à être implanté en étant disposé directement sur la couche de revêtement 4 et est conçu pour pouvoir être très facilement monté et démonté depuis cette position d'implantation. Il se présente pour ce faire sous la forme d'une semelle plane rigide 22, réalisée par exemple en matière plastique, dont une surface d'appui 23 est destinée à recevoir le ou les pieds du passager du véhicule automobile. La semelle plane rigide 22 est prévue pour être reliée au niveau de son extrémité supérieure 24 à la partie de tablier 1 par au moins une liaison fixe amovible. Selon l'exemple de réalisation illustré aux figures 3 à 5, la semelle comporte pour ce faire dans son extrémité supérieure 24 des ouvertures 240 adaptées pour recevoir des moyens de fixation mécanique amovibles 241 à une partie du tablier 1, tels que des clips de maintien fixés sur des goujons soudés à la partie de tablier 1, qui passent à travers la couche de revêtement 4 et la couche isolante 3. La semelle plane rigide 22 comprend en outre dans son extrémité inférieure 25 une zone d'appui 251 destinée à être positionnée en appui libre par rapport au plancher 2.

Ainsi implantée entre une partie du tablier 1 et le plancher 2 du véhicule, la semelle 22 est disposée de telle manière que la surface d'appui 23 se présente en étant inclinée vers l'avant du véhicule selon une inclinaison donnée et une face interne 26 de la surface d'appui 23 est positionnée en regard de la face extérieure 41 de la couche de revêtement 4. Un volume demeure ainsi disponible, qui s'étend entre la face interne 26 de la surface d'appui 23 du repose-pied et la face extérieure 41 de la couche de revêtement 4. Pour pourvoir à l'aménagement de ce volume disponible, la face interne 26 de la surface d'appui 23 est munie d'organes de liaison 261, 262, détaillés plus loin, qui sont conçus pour supporter un compartiment de rangement 27, de sorte que le volume interne du compartiment de rangement 27 s'étend entre la face interne 26 de la surface d'appui 23 et la face extérieure 41 de la couche de revêtement 4. Le compartiment de rangement 27 comprend notamment une partie de fond 270, opposée à la face interne 26 de la surface d'appui 23, sur laquelle peuvent être agencés des pieds d'appui 271, prévus pour reposer sur la face extérieure 41 de la couche de revêtement 4 lors de l'implantation du repose-pied 20.

Dans le mode de réalisation décrit, le compartiment de rangement 27 est réalisé sous la forme d'une enveloppe rigide moulée de manière à pouvoir recevoir un équipement d'aide à la réparation de pneus du véhicule automobile. En particulier, l'enveloppe rigide comprend une première forme 273, conçue pour recevoir un compresseur et une deuxième forme 274 conçue pour recevoir un réservoir contenant un produit d'étanchéité.

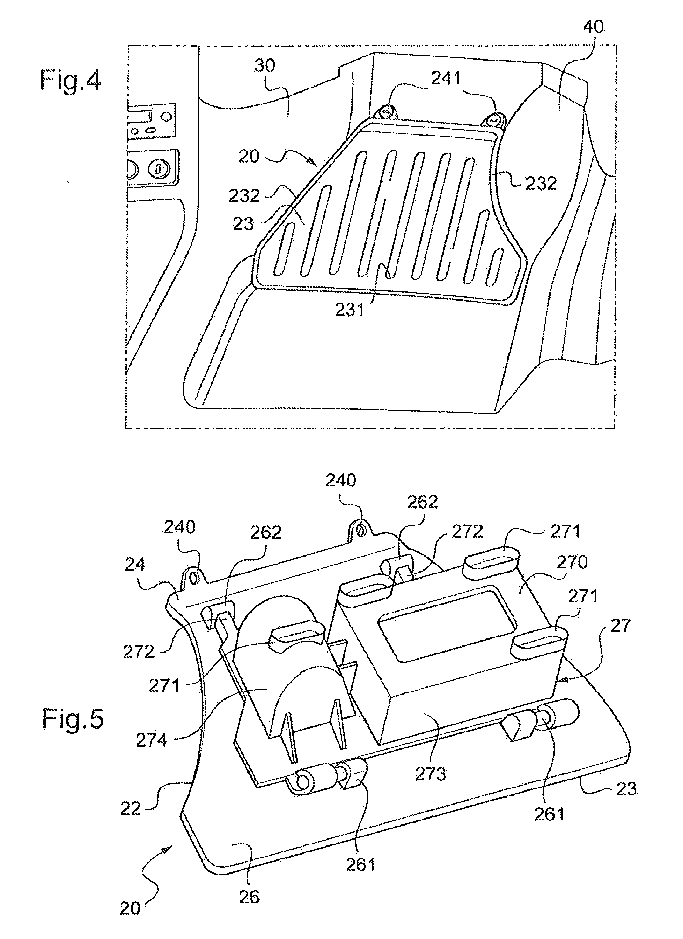

Plus précisément, les organes de liaison 261, 262 de la face interne 26 de la surface d'appui 23 avec le compartiment de rangement 27, sont conçus pour permettre un assemblage mobile de ces éléments selon une première configuration où le compartiment de rangement 27 est fermé par la face interne 26 de la surface d'appui 23 (correspondant à la configuration illustrée sur les figures 3 et 5) et une deuxième configuration où le volume interne du compartiment de rangement 27 est rendu accessible.

Pour ce faire, les organes de liaison équipant la face interne 26 de la surface d'appui 23 comprennent des moyens d'assemblage, de type articulation autour d'un axe charnière, comportant des moyens formant pivot 261, par l'intermédiaire desquels le compartiment de rangement 27 est relié à la face interne 26 de la surface d'appui 23 et permettant au compartiment de rangement 27 de pivoter autour d'un axe X-X sensiblement parallèle à la face interne 26 de la surface d'appui 23, et ainsi d'assurer le passage du compartiment de rangement 27 d'une configuration à l'autre.

En outre, les organes de liaison équipant la face interne 26 de la surface d'appui 23 comprennent des moyens de verrouillage 262, aptes à coopérer, par exemple par clipsage, avec des moyens correspondants 272 du compartiment de rangement 27, pour bloquer le compartiment de rangement dans la première configuration, où le compartiment de rangement 27 est fermé par la face interne 26 de la surface d'appui 23. Les moyens de verrouillage 262 se présentent par exemple sous la forme d'un organe d'accrochage agencé sur la face interne 26 de la surface d'appui 23, dans lequel est apte à venir s'accrocher de manière amovible un organe élastique 272 correspondant porté par le compartiment de rangement 27.

L'accès au compartiment de rangement 27 intégré au repose-pied 20 selon l'invention est rendu très aisé, dans la mesure où il suffit simplement de démonter les moyens de fixation mécanique amovibles 241 reliant le repose-pied 20 à une partie du tablier 1 pour pouvoir avoir accès à l'arrière du repose-pied 20 où se trouve logé le compartiment de rangement 27, sans qu'il soit nécessaire de manipuler la couche de revêtement de type moquette 4.

La semelle plane rigide 22 comporte encore dans sa partie plane constituée par la surface d'appui 23, une première série de nervures longitudinales ou transversales de rigidification 231, sensiblement parallèles, pour le confort d'accueil du pied. Cependant, une zone inférieure 28 de la surface d'appui 23, destinée à accueillir plus précisément le talon du pied passager, est dépourvue de telles nervures de rigidification, afin de limiter la résistance de cette zone en cas de choc pour réduire le risque de lésions éventuelles au niveau de la cheville du passager. Dans une variante non représentée, la partie de la face interne 26 en vis-à-vis de la zone inférieure 28 peut comporter une seconde série de nervures, plus fines que les nervures 231, de façon qu'elles soient adaptées à un choc éventuel.

Comme illustré plus précisément à la figure 4, la forme de la semelle plane rigide 22 est adaptée de sorte que, lorsque le repose-pied est implanté dans l'habitacle comme expliqué précédemment, les bords latéraux 232 de la surface d'appui 23 épousent intimement d'un côté, le relief du flanc 30 de console centrale du véhicule automobile et, de l'autre côté, le relief du passage de roue 40.

La surface d'appui 23 du repose-pied peut être revêtue d'un revêtement de garnissage, de type moquette, d'une part pour le confort du passager et, d'autre part, pour des considérations esthétiques, afin de procurer une continuité d'aspect avec la couche de revêtement 4 au niveau du plancher du véhicule.

La surface d'appui 23 peut aussi être tout simplement grainée et présenter des motifs en relief, ce qui permet de réduire les coûts mais également d'obtenir un gain de poids.

## Revendications

1. Repose-pied (20) destiné à être implanté entre une partie d'un tablier (1) et un plancher (2) d'un véhicule automobile, comportant un organe servant d'appui muni d'une surface d'appui (23) adaptée pour recevoir le ou les pieds d'un passager du véhicule automobile et en regard d'au moins une partie de laquelle est apte à s'étendre un tapis d'isolation phonique rapporté sur le plancher (2) du véhicule automobile comportant une couche isolante (3) interposée entre le plancher (2) et une couche de revêtement (4) rapportée sur ladite couche isolante (3), ledit organe servant d'appui comprenant en outre au moins un compartiment de rangement (27), **caractérisé en ce que** ladite surface d'appui (23) comprend une face interne (26) destinée à être positionnée en regard d'une face extérieure (41) de ladite couche de revêtement (4) lors de l'implantation du repose-pied (20), ladite face interne (26) étant munie d'organes de liaison (261, 262) conçus pour supporter ledit compartiment de rangement (27) de sorte que le volume interne dudit compartiment de rangement (27) s'étende entre ladite face interne (26) de ladite surface d'appui (23) et ladite face extérieure (41) de ladite couche de revêtement (4).

2. Repose-pied (20) selon la revendication 1, **caractérisé en ce que** ledit organe servant d'appui comprend une semelle plane rigide (22) conçue pour être reliée à son extrémité supérieure (24) à la partie de tablier (1) par au moins une liaison fixe amovible (241) tandis que son extrémité inférieure (25) comprend une zone d'appui (251) destinée à être positionnée en appui libre par rapport au plancher (2), de sorte que ladite surface d'appui (23) se présente en étant inclinée vers l'avant du véhicule selon une inclinaison donnée.

3. Repose-pied (20) selon l'une quelconque des revendications précédentes, **caractérisé en ce que** lesdits organes de liaison (261, 262) sont conçus pour permettre un assemblage mobile dudit compartiment de rangement (27) avec ladite face interne (26) de ladite surface d'appui (23), selon une première configuration où ledit compartiment de rangement (27) est fermé par ladite face interne (26) de ladite surface d'appui (23) et une deuxième configuration où ledit volume interne dudit compartiment de rangement (27) est rendu accessible.

4. Repose-pied selon la revendication 3, **caractérisé en ce que** lesdits organes de liaison comprennent des moyens de verrouillage (262) aptes à coopérer avec des moyens correspondants (272) du compartiment de rangement pour bloquer ledit compartiment de rangement (27) dans ladite première configuration.

5. Repose-pied selon l'une quelconque des revendications précédentes, **caractérisé en ce que** lesdits organes de liaison comprennent des moyens formant pivot (261) par l'intermédiaire desquels ledit compartiment de rangement (27) est relié à ladite face interne (26) de ladite surface d'appui (23), de sorte à constituer une liaison pivot apte à guider en rotation ledit compartiment de rangement (27) autour d'un axe de liaison (X-X) sensiblement parallèle à ladite face interne (26) de ladite surface d'appui (23).

6. Repose-pied (20) selon l'une quelconque des revendications précédentes, **caractérisé en ce que** ledit compartiment de rangement (27) comprend une partie de fond (270) opposée à ladite face interne (26) de ladite surface d'appui (23), ladite partie de fond (270) comprenant au moins un pied d'appui (271) destiné à reposer sur la face extérieure (41) de ladite couche de revêtement (4) lors de l'implantation du repose-pied.

7. Repose-pied (20) selon l'une quelconque des revendications précédentes, **caractérisé en ce que** ladite surface d'appui (23) dudit organe servant d'appui comprend une série de nervures de rigidification (231) sensiblement parallèles.

8. Repose-pied (20) selon la revendication 7, **caractérisé en ce que** ladite surface d'appui dudit organe servant d'appui comprend une zone inférieure (28) dépourvue desdites nervures de rigidification (231).

9. Repose-pied (20) selon l'une quelconque des revendications précédentes, **caractérisé en ce que** ledit compartiment de rangement (27) comprend une enveloppe rigide moulée selon au moins une forme permettant de recevoir un équipement d'aide à la réparation de pneus du véhicule automobile.

10. Repose-pied (20) selon la revendication 9, **caractérisé en ce que** ladite enveloppe rigide comprend une première forme (273) apte à recevoir un compresseur et une deuxième forme (274) apte à recevoir un réservoir contenant un produit d'étanchéité.

## Patentansprüche

1. Fußstütze (20), die zwischen einen Teil einer Motorraumrückwand (1) und einem Boden (2) eines Kraftfahrzeugs eingebaut werden soll, die ein Element umfasst, das als eine Stütze dient, die mit einer Stützfläche (23) versehen ist, die zum Aufnehmen des Fußes oder der Füße eines Insassen des Kraftfahrzeugs ausgeführt ist und gegen mindestens einen Teil dieser eine Schalldämmmatte auf dem Boden (2) des Kraftfahrzeugs ausgebreitet werden kann, die eine Isolierschicht (3) umfasst, die zwischen dem Boden (2) und einer auf der Isolierschicht (3) aufgebrachten Deckschicht (4) angeordnet ist, wobei das als Stütze dienende Element des Weiteren mindestens ein Staufach (27) umfasst, **dadurch gekennzeichnet, dass** die Stützfläche (23) eine Innenseite (26) umfasst, die zur Positionierung gegenüber einer Außenseite (41) der Deckschicht (4) während des Einbaus der Fußstütze (20) bestimmt ist, wobei die Innenseite (26) mit Verbindungselementen (261, 262) versehen ist, die zum Stützen des Staufachs (27) konstruiert sind, so dass sich das Innenvolumen des Staufachs (27) zwischen der Innenseite (26) der Stützfläche (23) und der Außenseite (41) der Deckschicht (4) erstreckt.

2. Fußstütze (20) nach Anspruch 1, **dadurch gekennzeichnet, dass** das als Stütze dienende Element eine starre planare Unterlage (22) umfasst, die zur Verbindung an ihrem oberen Ende (24) mit dem Teil der Motorraumrückwand (1) durch mindestens eine lösbare feste Verbindung (241) konstruiert ist, wohingegen ihr unteres Ende (25) einen Stützbereich (251) umfasst, der zur frei stützenden Positionierung bezüglich des Bodens (2) bestimmt ist, so dass die Stützfläche (23) zur Front des Fahrzeugs mit einer gegebenen Neigung geneigt gezeigt wird.

3. Fußstütze (20) nach einem der vorhergehenden Ansprüche, **dadurch gekennzeichnet, dass** die Verbindungselemente (261, 262) dahingehend konstruiert sind, einen beweglichen Zusammenbau des Staufachs (27) mit der Innenseite (26) der Stützfläche (23) gemäß einer ersten Konfiguration, bei der das Staufach (27) durch die Innenseite (26) der Stützfläche (23) geschlossen ist, und gemäß einer zweiten Konfiguration, bei der das Innenvolumen des Staufachs (27) zugänglich gemacht wird, zu gestatten.

4. Fußstütze nach Anspruch 3, **dadurch gekennzeichnet, dass** die Verbindungselemente Verriegelungsmittel (262) umfassen, die dahingehend mit entsprechenden Mitteln (272) des Staufachs zusammenwirken können, das Staufach (27) in der ersten Konfiguration zu verriegeln.

5. Fußstütze nach einem der vorhergehenden Ansprüche, **dadurch gekennzeichnet, dass** die Verbindungselemente einen Drehzapfen (261) bildende Mittel umfassen, durch die das Staufach (27) mit der Innenfläche (26) der Stützfläche (23) verbunden ist, so dass eine Schwenkverbindung erzeugt wird, die das Staufach (27) um eine Verbindungsachse (X-X), die im Wesentlichen parallel zur Innenseite (26) der Stützfläche (23) verläuft, herum drehbar führen kann.

6. Fußstütze (20) nach einem der vorhergehenden Ansprüche, **dadurch gekennzeichnet, dass** das Staufach (27) einen Bodenteil (270) umfasst, der der Innenseite (26) der Stützfläche (23) gegenüberliegt, wobei der Bodenteil (270) mindestens einen Stützfuß (271) umfasst, der zur Anlage auf der Außenseite (41) der Deckschicht (4) beim Einbau der Fußstütze bestimmt ist.

7. Fußstütze (20) nach einem der vorhergehenden Ansprüche, **dadurch gekennzeichnet, dass** die Stützfläche (23) des als Stütze dienenden Elements eine Reihe von im Wesentlichen parallelen Versteifungsrippen (231) umfasst.

8. Fußstütze (20) nach Anspruch 7, **dadurch gekennzeichnet, dass** die Stützfläche des als Stütze dienenden Elements einen unteren Bereich (28) ohne Versteifungsrippen (231) umfasst.

9. Fußstütze (20) nach einem der vorhergehenden Ansprüche, **dadurch gekennzeichnet, dass** das Staufach (27) ein starres Gehäuse umfasst, das entsprechend mindestens einer Form geformt wird, die die Aufnahme einer Reifenreparaturausrüstung für das Kraftfahrzeug gestattet.

10. Fußstütze (20) nach Anspruch 9, **dadurch gekennzeichnet, dass** das starre Gehäuse eine erste Form (273), die einen Kompressor aufnehmen kann, und eine zweite Form (274), die einen ein Dichtungsmittel enthaltenden Behälter aufnehmen kann, umfasst.

## Claims

1. Footrest (20) intended to be fitted between part of a front body panel (1) and a floor (2) of a motor vehicle, comprising an element acting as a support provided with a support surface (23) adapted to receive the foot or feet of a motor vehicle passenger, facing at least part of which surface a sound insulation mat can be laid, mounted on the floor (2) of the motor vehicle, said sound insulation mat comprising an insulating layer (3) interposed between the floor (2) and a covering layer (4) mounted on said insulating layer (3), said element acting as a support, moreover comprising at least one storage compartment (27), **characterized in that** said support surface (23) comprises an inner face (26) intended to be positioned facing an outer face (41) of said covering layer (4) during fitting of the footrest (20), said inner face (26) being provided with linkage elements (261, 262) designed to support said storage compartment (27), such that the internal space of said storage compartment (27) extends between said inner face (26) of said support surface (23) and said outer face (41) of said covering layer (4).

2. Footrest (20) according to Claim 1, **characterized in that** said element acting as a support comprises a rigid planar baseplate (22) designed to be connected at its upper end (24) to the front body panel (1) part by at least one fixed detachable link (241), whereas its lower end (25) comprises a support area (251) intended to be positioned in a freely supported manner in relation to the floor (2), such that said support surface (23) is shown inclined towards the front of the vehicle at a given inclination.

3. Footrest (20) according to either one of the preceding claims, **characterized in that** said linkage elements (261, 262) are designed to allow a mobile assembly of said storage compartment (27) with said inner face (26) of said support surface (23) according to a first configuration in which said storage compartment (27) is closed by said inner face (26) of said support surface (23) and a second configuration in which said internal space of said storage compartment (27) is made accessible.

4. Footrest according to Claim 3, **characterized in that** said linkage elements comprise locking means (262) suitable for cooperating with corresponding means (272) of the storage compartment, in order to lock said storage compartment (27) in said first configuration.

5. Footrest according to any one of the preceding claims, **characterized in that** said linkage elements comprise means forming a pivot (261) which enable said storage compartment (27) to be connected to said inner face (26) of said support surface (23), so as to constitute a pivot link capable of guiding said storage compartment (27) rotationally about a linkage axis (X-X) significantly parallel to said inner face (26) of said support surface (23).

6. Footrest (20) according to any one of the preceding claims, **characterized in that** said storage compartment (27) comprises a bottom part (270) opposite said inner face (26) of said support surface (23), said bottom part (270) comprising at least one support foot (271) intended to rest on the outer face (41) of said covering layer (4) when the footrest is fitted

7. Footrest (20) according to any one of the preceding claims, **characterized in that** said support surface (23) of said element acting as a support comprises a series of substantially parallel stiffening ribs (231).

8. Footrest (20) according to Claim 7, **characterized in that** said support surface of said element acting as a support comprises a lower area (28) free from said stiffening ribs (231).

9. Footrest (20) according to any one of the preceding claims, **characterized in that** said storage compartment (27) comprises a rigid casing molded according to at least one form enabling a tire repair kit for the motor vehicle to be received.

10. Footrest (20) according to Claim 9, **characterized in that** said rigid casing comprises a first form (273) capable of receiving a compressor and a second form (274) capable of receiving a reservoir containing a sealing product.
